# EUROPEAN PATENT APPLICATION

(11) **EP 4 451 732 A1**
(43) Date of publication of application: **23.10.2024**
(21) Application number: 22906573.5
(22) Date of filing: 13.12.2022
(51) Int. Cl.: H04W 24/10

(54) **DATA COLLECTION METHOD AND APPARATUS, AND FIRST DEVICE AND SECOND DEVICE**

(30) Priority: 15.12.2021 CN 202111540035
(71) Applicant: VIVO MOBILE COMMUNICATION CO., LTD., Dongguan, Guangdong 523863 (CN)
(72) Inventor: SUN, Bule, Dongguan, Guangdong 523863 (CN); SUN, Peng, Dongguan, Guangdong 523863 (CN); YANG, Ang, Dongguan, Guangdong 523863 (CN)
(74) Representative: Conti, Marco
(86) International application number: PCT/CN2022/138757
(87) International publication number: WO 2023/109828

(57) **Abstract**

This application discloses a data collection method and apparatus, a first device, and a second device, and pertains to the field of communication technologies. The data collection method in an embodiment of this application includes: sending, by a first device, a first instruction to a second device, instructing the second device to collect and report training data for training a specific AI model; receiving, by the first device, training data reported by the second device; and constructing, by the first device, a data set using the training data and training the specific AI model.

## Description

### CROSS-REFERENCE TO RELATED APPLICATIONS

This application claims priority to Chinese Patent Application No. 202111540035.0, filed in China on December 15, 2021, which is incorporated herein by reference in its entirety.

### TECHNICAL FIELD

This application pertains to the field of communication technologies, and specifically relates to a data collection method and apparatus, a first device, and a second device.

### BACKGROUND

Artificial intelligence (Artificial Intelligence, AI) has been widely used in various fields. AI modules are implemented in many forms, for example, neural network, decision tree, support vector machine, and Bayesian classifier.

In wireless communication systems, centralized training of AI modules requires collection of a large amount of data from remote ends to construct data sets. Due to significant overlap in wireless data from the remote ends, it is not necessary to collect data from all users. This can alleviate transmission burden during data collection and avoid excessive duplicate (or similar) samples in data sets.

### SUMMARY

Embodiments of this application provide a data collection method and apparatus, a first device, and a second device, so as to alleviate transmission burden during data collection and avoid excessive duplicate samples in data sets.

According to a first aspect, a data collection method is provided and includes:
sending, by a first device, a first instruction to a second device, instructing the second device to collect and report training data for training a specific AI model;
receiving, by the first device, training data reported by the second device; and
constructing, by the first device, a data set using the training data and training the specific AI model.

According to a second aspect, a data collection apparatus is provided and includes:
a sending module, configured to send a first instruction to a second device, instructing the second device to collect and report training data for training a specific AI model;
a receiving module, configured to receive training data reported by the second device; and
a training module, configured to construct a data set using the training data and train the specific AI model.

According to a third aspect, a data collection method is provided and includes:
receiving, by a second device, a first instruction from a first device, where the first instruction is used to instruct the second device to collect and report training data for training a specific AI model; and
collecting, by the second device, training data and reporting the training data to the first device.

According to a fourth aspect, a data collection apparatus is provided and includes:
a receiving module, configured to receive a first instruction from a first device, where the first instruction is used to instruct a second device to collect and report training data for training a specific AI model; and
a processing module, configured to collect training data and report the training data to the first device.

According to a fifth aspect, a first device is provided. The first device includes a processor and a memory, where a program or instructions capable of running on the processor are stored in the memory, and when the program or instructions are executed by the processor, the steps of the method according to the first aspect are implemented.

According to a sixth aspect, a first device is provided and includes a processor and a communication interface. The communication interface is configured to: send a first instruction to a second device, instructing the second device to collect and report training data for training a specific AI model; and receive training data reported by the second device. The processor is configured to construct a data set using the training data and train the specific AI model.

According to a seventh aspect, a second device is provided. The second device includes a processor and a memory, where a program or instructions capable of running on the processor are stored in the memory, and when the program or instructions are executed by the processor, the steps of the method according to the third aspect are implemented.

According to an eighth aspect, a second device is provided and includes a processor and a communication interface. The communication interface is configured to: receive a first instruction from a first device, where the first instruction is used to instruct the second device to collect and report training data for training a specific AI model. The processor is configured to collect training data and report the training data to the first device.

According to a ninth aspect, a data collection system is provided and includes a first device and a second device, where the first device may be configured to execute the steps of the data collection method according to the first aspect, and the second device may be configured to execute the steps of the data collection method according to the third aspect.

According to a tenth aspect, a readable storage medium is provided, where the readable storage medium has a program or instructions stored thereon, and when the program or the instructions are executed by a processor, the steps of the method according to the first aspect are implemented, or the steps of the method according to the third aspect are implemented.

According to an eleventh aspect, a chip is provided. The chip includes a processor and a communication interface, where the communication interface is coupled to the processor, and the processor is configured to run a program or instructions to implement the method according to the first aspect or the method according to the third aspect.

According to a twelfth aspect, a computer program/program product is provided. The computer program/program product is stored in a storage medium. The computer program/program product is executed by at least one processor to implement the steps of the data collection method according to the first aspect or the steps of the data collection method according to the third aspect.

In the embodiments of this application, the first device does not request all candidate second devices to collect and report training data. Instead, the first device first screens the candidate second devices to determine a second device required to collect and report the training data, and then sends the first instruction to the second device, instructing the second device to collect and report the training data. This can alleviate transmission burden during data collection and avoid excessive duplicate samples in data sets, thereby alleviating burden for model training.

### BRIEF DESCRIPTION OF DRAWINGS

FIG. 1 is a block diagram of a wireless communication system to which embodiments of this application are applicable;
FIG. 2 is a schematic diagram of channel state information feedback;
FIG. 3 is a schematic performance diagram of AI training with different iteration counts for;
FIG. 4 is a schematic flowchart of a first device side data collection method according to an embodiment of this application;
FIG. 5 is a schematic flowchart of a second device side data collection method according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustration purposes, and NR terms are used in most of the following descriptions, although these technologies may also be applied to other applications than the NR system application, for example, to the 6th generation (6^{th} Generation, 6G) communication system.

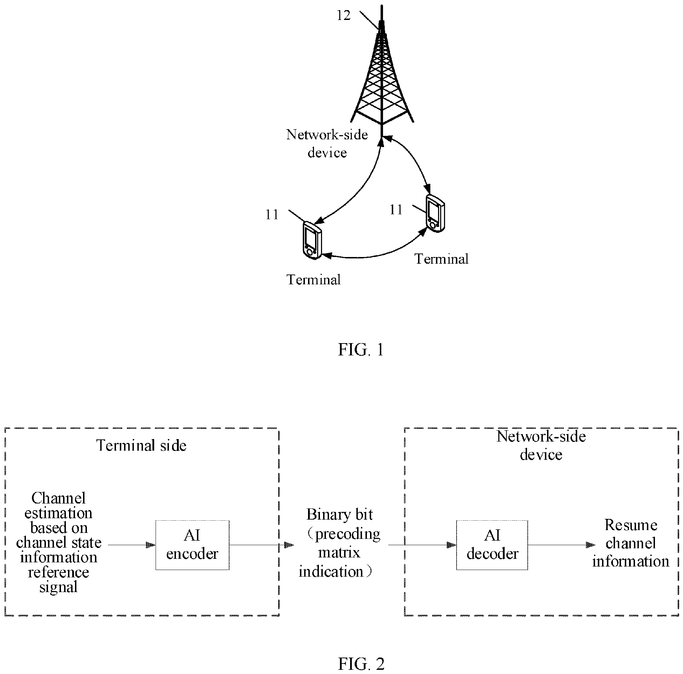

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart j ewelry (a smart bangle, a smart bracelet, a smart ring, a smart necklace, a smart ankle bangle, a smart anklet, or the like), a smart wristband, smart clothing, or the like. It should be noted that the specific type of the terminal 11 is not limited in the embodiments of this application. The network-side device 12 may include an access network device or core network device, where the access network device 12 may also be referred to as a radio access network device, a radio access network (Radio Access Network, RAN), a radio access network function, or a radio access network unit. The access network device 12 may include a base station, a WLAN access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example for description, and the specific type of the base station is not limited.

Typically, the AI algorithms selected and the models adopted vary depending on the type of solution. A main method for improving the performance of the 5th generation (5th Generation, 5G) network using AI is to enhance or replace the existing algorithms or processing modules with neural network-based algorithms and models. In specified scenarios, the neural network-based algorithms and models can achieve better performance than deterministic algorithms. Commonly used neural networks include deep neural networks, convolutional neural networks, and recurrent neural networks. With the aid of existing AI tools, operations of building, training, and verifying neural networks can be implemented.

Replacing modules in existing systems with AI methods can effectively improve system performance. As shown in FIG. 2, for channel state information (Channel State Information, CSI) feedback, conventional CSI computation is replaced with an AI encoder (encoder) and an AI decoder (decoder), which can significantly improve the corresponding system performance with the same overhead. Through AI-based solutions, the spectrum efficiency of a system can be improved by approximately 30%.

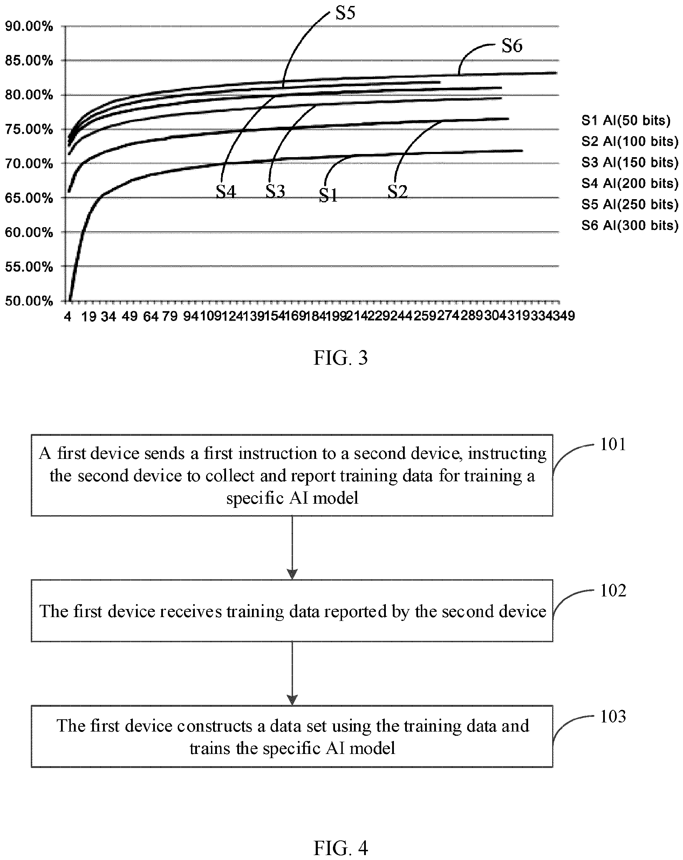

The performance of Al training with different iteration counts is shown in FIG. 3, where the horizontal coordinate represents a training period, and the vertical coordinate represents a square of correlation. Different training data are needed for different iterations. It can be seen that a large quantity of training iterations are needed for performance convergence.

When AI is applied to a wireless communication system, many models work on a terminal side, and many tasks working on a base station side require training with data collected on the terminal side. Due to the limited computational power of a terminal, a feasible solution is to report data to a network side for centralized training on the network side. Since many terminals have identical or similar terminal types and service types and operate in identical or similar environments, data of these terminals have high similarity. Identical data should be avoided as much as possible in data sets for training. This is because identical data have limited benefits for model convergence and may lead to overfitting or poor generalization performance. Meta-learning is a learning method to improve model generalization, where multiple tasks are constructed based on data sets, and multi-task learning is performed to obtain an optimal initialized model. An initialized model obtained through meta-learning in a new scenario can quickly undergo fine-tuning and convergence, featuring high adaptability. When multiple tasks are constructed, it is required that some differences are present between data characteristics of different tasks. Therefore, both a conventional learning scheme and a meta-learning scheme have requirements for the coincidence degree or similarity of data in data sets.

The following describes in detail the data collection method provided in the embodiments of this application through some embodiments and application scenarios thereof with reference to the accompanying drawings.

An embodiment of this application provides a data collection method. As shown in FIG. 4, the method includes the following steps.

Step 101: A first device sends a first instruction to a second device, instructing the second device to collect and report training data for training a specific AI model.

Step 102: The first device receives training data reported by the second device.

Step 103: The first device constructs a data set using the training data and trains the specific AI model.

In this embodiment of this application, the first device does not request all candidate second devices to collect and report training data. Instead, the first device first screens the candidate second devices to determine a second device required to collect and report the training data, and then sends the first instruction to the second device, instructing the second device to collect and report the training data. This can alleviate transmission burden during data collection and avoid excessive duplicate samples in data sets, thereby alleviating burden for model training.

In some embodiments, that a first device sends a first instruction to a second device includes:
the first device selects N second devices from M candidate second devices according to a preset first screening condition, and unicasts the first instruction to the N second devices, where M and N are positive integers, and N is less than or equal to M; or
the first device broadcasts the first instruction to the M candidate second devices, where the first instruction carries a second screening condition, the second screening condition is used for selecting second devices to report the training data, where the second device satisfies the second screening condition.

In this embodiment, the candidate second devices are within a communication range of the first device, and the second devices reporting the training data are selected from the candidate second devices. All the candidate second devices can serve as the second devices or some candidate second devices can be selected to serve as the second devices. Broadcasting means that the first instruction is sent to all the candidate second devices, while unicasting means that the first instruction is sent to only the selected second devices. All the candidate second devices that have received the unicast first instruction are required to collect and report the training data. A candidate second device that has received the broadcast first instruction needs to judge whether it satisfies the second screening condition. Only the candidate second devices satisfying the second screening condition collect and report the training data.

In some embodiments, the first device sends the first instruction to the second devices through at least one of the following:
medium access control (Medium Access Control, MAC) control element (Control Element, CE);
radio resource control (Radio Resource Control, RRC) message;
non-access stratum (Non-access stratum, NAS) message;
management and orchestration message;
user plane data;
downlink control information;
system information block (System Information Block, SIB);
layer 1 signaling of physical downlink control channel (Physical Downlink Control Channel, PDCCH);
information of physical downlink shared channel (Physical Downlink Shared Channel, PDSCH);
(Message, MSG) 2 information of physical random access channel (Physical Random Access Channel, PRACH);
MSG 4 information of physical random access channel PRACH;
MSG B information of physical random access channel PRACH;
information or signaling of broadcast channel;
Xn interface (an interface) signaling;
PC5 interface (an interface) signaling;
information or signaling of physical sidelink control channel (Physical Sidelink Control Channel, PSCCH);
information of physical sidelink shared channel (Physical Sidelink Shared Channel, PSSCH);
information of physical sidelink broadcast channel (Physical Sidelink Broadcast Channel, PSBCH);
information of physical sidelink discovery channel (Physical Sidelink Discovery Channel, PSDCH); and
information of physical sidelink feedback channel (Physical Sidelink Feedback Channel, PSFCH).

In some embodiments, before that a first device sends a first instruction to a second device, the method further includes:
the first device receives first training data and/or a first parameter reported by the candidate second devices, where the first parameter may be a judgment parameter for the first screening condition.

In this embodiment, the candidate second devices can first report a small amount of training data (that is, the first training data) and/or the first parameter. The first device determines a source of data participating in the training based on the small amount of training data and/or the first parameter, and selects second devices to collect and report training data, preventing all the second devices from reporting training data.

In some embodiments, the first device receives only the first training data reported by the candidate second devices and determines the first parameter based on the first training data. The first device can deduce, perceive, detect, or infer the first parameter based on the first training data. The first device can screen the candidate second devices based on the first parameter to determine the second devices.

In some embodiments, the first parameter includes at least one of the following:
data type of the candidate second device;
data distribution parameter of the candidate second device;
service type of the candidate second device, for example, enhanced mobile broadband (Enhanced Mobile Broadband, eMBB), ultra-reliable low-latency communications (Ultra-Reliable Low-Latency Communications, URLLC), massive machine type communication (Massive Machine Type Communication, mMTC), and other 6G new scenarios;
operation scenario of the candidate second device, including but not limited to high speed, low speed, line of sight (Line or Sight, LOS), non line of sight (Non Line of Sight, NLOS), high signal-to-noise ratio, low signal-to-noise ratio, and other operation scenarios;
communication network access mode of the candidate second device, including mobile networks, WiFi, and fixed networks, where the mobile networks include the 2nd generation (2nd Generation, 2G), the 3rd generation (3rd Generation, 3G), the 4th generation (4th Generation, 4G), 5G, and 6G;
channel quality of the candidate second device;
data collection difficulty of the candidate second device;
power state of the candidate second device, for example, a specific value of available remaining power, a hierarchical description result, charging, or not charging; and
storage state of the candidate second device, for example, a specific value of available memory or a hierarchical description result.

In this embodiment, the candidate second devices can first report a small amount of training data (that is, the first training data) and/or the first parameter to the first device, where the first parameter may be a judgment parameter for the first screening condition. The first device determines second devices required to collect and report training data according to the first screening condition. The second devices are selected from the candidate second devices. Specifically, there may be M candidate second devices, from which N second devices are determined to be required to collect and report training data, where N may be less than M or equal to M.

In a specific example, the second devices required to collect and report training data can be determined based on data types of candidate second devices, the candidate second devices are grouped based on the data types of the candidate second devices, and the data types of the candidate second devices in each group are same or similar. When the second devices are selected, K1 candidate second devices are selected from each group of candidate second devices to serve as the second devices required to collect and report training data, where K1 is a positive integer. This can ensure the diversity of data participating in training and ensure that there are second devices collecting and reporting training data in each group of candidate second devices.

In a specific example, the second devices required to collect and report training data can be determined based on service types of candidate second devices, the candidate second devices are grouped based on the service types of the candidate second devices, and the service types of the candidate second devices in each group are same or similar. When the second devices are selected, K2 candidate second devices are selected from each group of candidate second devices to serve as the second devices required to collect and report training data, where K2 is a positive integer. This can ensure the diversity of data participating in training and ensure that there are second devices collecting and reporting training data in each group of candidate second devices.

In a specific example, the second devices required to collect and report training data can be determined based on data distribution parameters of candidate second devices, the candidate second devices are grouped based on the data distribution parameters of the candidate second devices, and the data distribution parameters of the candidate second devices in each group are same or similar. When the second devices are selected, K3 candidate second devices are selected from each group of candidate second devices to serve as the second devices required to collect and report training data, where K3 is a positive integer. This can ensure the diversity of data participating in training and ensure that there are second devices collecting and reporting training data in each group of candidate second devices.

In a specific example, the second devices required to collect and report training data can be determined based on operation scenarios of candidate second devices, the candidate second devices are grouped based on the operation scenarios of the candidate second devices, and the operation scenarios of the candidate second devices in each group are same or similar. When the second devices are selected, A candidate second devices are selected from each group of candidate second devices to serve as the second devices required to collect and report training data, where A is a positive integer. This can ensure the diversity of data participating in training and ensure that there are second devices collecting and reporting training data in each group of candidate second devices.

In a specific example, the second devices required to collect and report training data can be determined based on communication network access modes of candidate second devices, and priorities of the candidate second devices are ordered based on the communication network access modes of the candidate second devices. The communication network access modes include fixed networks, WiFi, and mobile networks, where the mobile networks include 2G, 3G, 4G, 5G, 6G, and the like. A priority of a fixed network being selected is greater than or equal to a priority of WiFi being selected, and the priority of WiFi being selected is greater than or equal to a priority of the mobile network being selected. In the mobile networks, a higher generation leads to a higher priority being selected. For example, a priority of a 5G candidate second device being selected is higher than that of a 4G candidate second device being selected. B candidate second devices are selected from the candidate second devices in a descending order of priority to serve as the second devices required to collect and report training data, where B is a positive integer.

In a specific example, the second devices required to collect and report training data can be determined based on channel quality of the candidate second devices, and priorities of the candidate second devices are ordered based on the channel quality of the candidate second devices. A candidate second device with higher channel quality has a higher priority being selected. C candidate second devices are selected from the candidate second devices in a descending order of priority to serve as the second devices required to collect and report training data, where C is a positive integer. This can ensure that second devices with good channel quality collect and report training data and ensure the training quality of the specific AI model.

In a specific example, the second devices required to collect and report training data can be determined based on data collection difficulties of the candidate second devices, and priorities of the candidate second devices are ordered based on the data collection difficulties of the candidate second devices. A candidate second device with a lower data collection difficulty has a higher priority being selected. D candidate second devices are selected from the candidate second devices in a descending order of priority to serve as the second devices required to collect and report training data, where D is a positive integer. This can reduce the data collection difficulty.

In a specific example, the second devices required to collect and report training data can be determined based on power states of the candidate second devices, and priorities of the candidate second devices are ordered based on the power states of the candidate second devices. A candidate second device with higher power has a higher priority being selected. In addition, a candidate second device being charged has the highest priority being selected. E candidate second devices are selected from the candidate second devices in a descending order of priority to serve as the second devices required to collect and report training data, where E is a positive integer. This can ensure that the second devices collecting and reporting training data have sufficient power.

In a specific example, the second devices required to collect and report training data can be determined based on storage states of the candidate second devices, and priorities of the candidate second devices are ordered based on the storage states of the candidate second devices. A candidate second device with a larger available storage space has a higher priority being selected. F candidate second devices are selected from the candidate second devices in a descending order of priority to serve as the second devices required to collect and report training data, where F is a positive integer. This can ensure that the second devices collecting and reporting training data have sufficient available storage spaces to store training data.

In some embodiments, the unicast first instruction includes at least one of the following:
number of samples of training data to be collected by the second device, where the numbers of samples of training data to be collected by different second devices are different or the same;
time when the second device is to collect the training data, where the times when different second devices are to collect the training data are different or the same;
time when the second device is to report the training data to the first device, where the times when different second devices are to report the training data are different or the same;
whether data collected needs preprocessing;
manner of preprocessing the data collected; and
data format of the training data to be reported by the second device to the first device.

In some embodiments, the broadcast first instruction includes at least one of the following:
identity of a candidate second device collecting data;
identity of a candidate second device not collecting data;
number of samples of training data required to be collected by the candidate second device collecting data, where the numbers of samples of training data required to be collected by different candidate second devices are different or the same;
time when the candidate second device collecting data is to collect the training data, where the times when different candidate second devices are to collect the training data are different or the same;
time when the candidate second device collecting data is to report the training data to the first device, where the times when different candidate second devices are to report the training data are different or the same;
whether the data collected needs preprocessing;
manner of preprocessing the data collected;
data format of the training data reported to the first device by the candidate second device collecting data; and
the first screening condition.

The identity of the candidate second device collecting data and the identity of the candidate second device not collecting data constitute the second screening condition. The candidate second device can judge whether it satisfies the second screening condition according to its own identity.

In some embodiments, after the training a specific AI model, the method further includes:
the first device sends the trained AI model and a hyper-parameter to L inference devices, where L is greater than M, equal to M, or less than M.

In this embodiment, the first device constructs a training data set based on the received training data, trains the specific AI model, and sends the AI model for training convergence and the hyper-parameter to the L inference devices. The inference devices are second devices required to perform performance verification and inference on the AI model. The inference devices can be selected from the candidate second devices or other second devices than the candidate second devices.

In some embodiments, the first device sends the trained AI model and the hyper-parameter to the inference devices through at least one of the following:
medium access control MAC control element CE;
radio resource control RRC message;
non-access stratum NAS message;
management and orchestration message;
user plane data;
downlink control information;
system information block SIB;
physical downlink control channel PDCCH layer 1 signaling;
physical downlink shared channel PDSCH information;
MSG 2 information of physical random access channel PRACH;
MSG 4 information of physical random access channel PRACH;
MSG B information of physical random access channel PRACH;
information or signaling of broadcast channel;
Xn interface signaling;
PC5 interface signaling;
information or signaling of physical sidelink control channel PSCCH;
information of physical sidelink shared channel PSSCH;
information of physical sidelink broadcast channel PSBCH;
information of physical sidelink discovery channel PSDCH; and
information of physical sidelink feedback channel PSFCH.

In some embodiments, the AI model is a meta-learning model, and the hyper-parameter may be determined by the first parameter.

In some embodiments, the hyper-parameter associated with the meta-learning model includes at least one of the following:
outer iteration learning rate;
inner iteration learning rates corresponding to different training tasks or the inference devices;
meta-learning rate;
inner iteration counts corresponding to different training tasks or the inference devices; and
outer iteration counts corresponding to different training tasks or the inference devices.

In this embodiment, the first device may be a network-side device, and the second device may be a terminal. Alternatively, the first device is a network-side device, and the second device is a network-side device, for example, a scenario in which a plurality of network-side devices gather training data to one network-side device for training. Alternatively, the first device is a terminal, and the second device is a terminal, for example, a scenario in which a plurality of terminals gather training data to one terminal for training.

In addition, the candidate second device may be a network-side device or a terminal. The inference device may be a network-side device or a terminal.

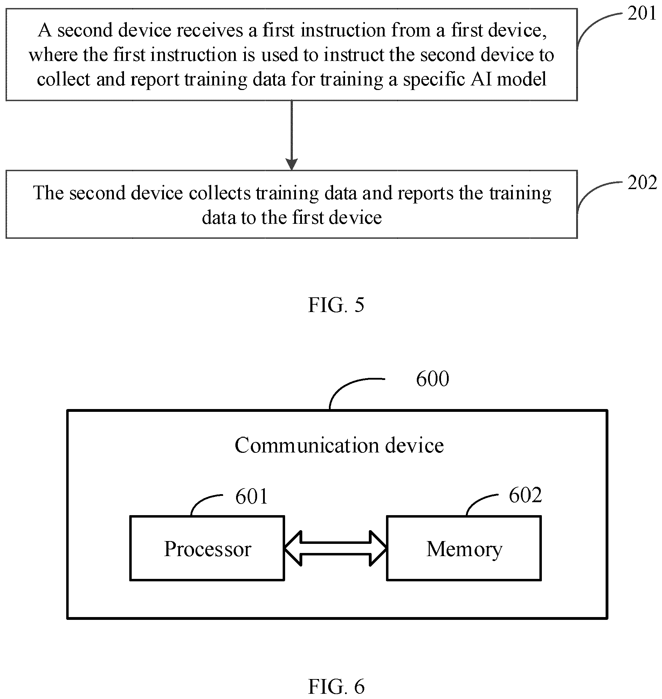

An embodiment of this application further provides a data collection method. As shown in FIG. 5, the method includes the following steps.

Step 201: A second device receives a first instruction from a first device, where the first instruction is used to instruct the second device to collect and report training data for training a specific AI model.

Step 202: The second device collects training data and reports the training data to the first device.

In this embodiment of this application, the first device does not request all candidate second devices to collect and report training data. Instead, the first device first screens the candidate second devices to determine a second device required to collect and report the training data, and then sends the first instruction to the second device, instructing the second device to collect and report the training data. This can alleviate transmission burden during data collection and avoid excessive duplicate samples in data sets, thereby alleviating burden for model training.

In some embodiments, the second device reports the training data to the first device through at least one of the following:
medium access control MAC control element CE;
radio resource control RRC message;
non-access stratum NAS message;
layer 1 signaling of physical uplink control channel PUCCH;
MSG 1 information of physical random access channel PRACH;
MSG 3 information of physical random access channel PRACH;
MSG A information of physical random access channel PRACH;
information of physical uplink shared channel PUSCH;
Xn interface signaling;
PC5 interface signaling;
information or signaling of physical sidelink control channel PSCCH;
information of physical sidelink shared channel PSSCH;
information of physical sidelink broadcast channel PSBCH;
information of physical sidelink discovery channel PSDCH; and
information of physical sidelink feedback channel PSFCH.

In some embodiments, that a second device receives a first instruction from a first device includes:
the second device receives the first instruction unicast by the first device, where the second device is a second device selected by the first device from candidate second devices according to a preset first screening condition; or
the second device receives the first instruction broadcast by the first device to candidate second devices, where the first instruction carries a second screening condition, and the second screening condition is used for selecting second devices to report the training data, where the second device satisfies the second screening condition.

In some embodiments, that the second device collects training data and reports the training data to the first device includes:
in a case that the second device has received the first instruction unicast by the first device, the second device collects and reports the training data; or
in a case that the second device has received the first instruction broadcast by the first device, the second device collects and reports the training data.

In this embodiment, the candidate second devices are within a communication range of the first device, and the second devices reporting the training data are selected from the candidate second devices. All the candidate second devices can serve as the second devices or some candidate second devices can be selected to serve as the second devices. Broadcasting means that the first instruction is sent to all the candidate second devices, while unicasting means that the first instruction is sent to only the selected second device. All the candidate second devices that have received the unicast first instruction are required to collect and report the training data. The candidate second device that has received the broadcast first instruction needs to judge whether it satisfies the second screening condition. Only the candidate second devices satisfying the second screening condition collect and report the training data.

In some embodiments, before that a second device receives a first instruction from a first device, the method further includes:
the candidate second devices report first training data and/or a first parameter to the first device, where the first parameter may be a judgment parameter for the first screening condition.

In this embodiment, the candidate second devices can first report a small amount of training data (that is, the first training data) and/or the first parameter. The first device determines a source of data participating in the training based on the small amount of training data and/or the first parameter, and selects second devices to collect and report training data, preventing all the second devices from reporting training data.

In some embodiments, the second device reports the first training data and/or the first parameter to the first device through at least one of the following:
medium access control MAC control element CE;
radio resource control RRC message;
non-access stratum NAS message;
layer 1 signaling of physical uplink control channel PUCCH;
MSG 1 information of physical random access channel PRACH;
MSG 3 information of physical random access channel PRACH;
MSG A information of physical random access channel PRACH;
information of physical uplink shared channel PUSCH;
Xn interface signaling;
PC5 interface signaling;
information or signaling of physical sidelink control channel PSCCH;
information of physical sidelink shared channel PSSCH;
information of physical sidelink broadcast channel PSBCH;
information of physical sidelink discovery channel PSDCH; and
information of physical sidelink feedback channel PSFCH.

In some embodiments, the candidate second devices report only the first training data to the first device, where the first training data is used for determining the first parameter.

In some embodiments, the first device receives only the first training data reported by the candidate second devices and determines the first parameter based on the first training data. The first device can deduce, perceive, detect, or infer the first parameter based on the first training data. The first device can screen the candidate second devices based on the first parameter to determine the second devices.

In some embodiments, the first parameter includes at least one of the following:
data type of the candidate second device;
data distribution parameter of the candidate second device;
service type of the candidate second device, for example, enhanced mobile broadband (eMBB), ultra-reliable low-latency communications (URLLC), massive machine type communication (mMTC), and other 6G new scenarios;
operation scenario of the candidate second device, including but not limited to high speed, low speed, line of sight LOS, non line of sight NLOS, high signal-to-noise ratio, low signal-to-noise ratio, and other operation scenarios;
communication network access mode of the candidate second device, including mobile networks, WiFi, and fixed networks, where the mobile networks include 2G, 3G, 4G, 5G, and 6G;
channel quality of the candidate second device;
data collection difficulty of the candidate second device;
power state of the candidate second device, for example, a specific value of available remaining power, a hierarchical description result, charging, or not charging; and
storage state of the candidate second device, for example, a specific value of available memory or a hierarchical description result.

In this embodiment, the candidate second devices can first report a small amount of training data (that is, the first training data) and/or the first parameter to the first device, where the first parameter may be a judgment parameter for the first screening condition. The first device determines second devices required to collect and report training data according to the first screening condition. The second devices are selected from the candidate second devices. Specifically, there may be M candidate second devices, from which N second devices are determined to be required to collect and report training data, where N may be less than M or equal to M.

In a specific example, the second devices required to collect and report training data can be determined based on data types of candidate second devices, the candidate second devices are grouped based on the data types of the candidate second devices, and the data types of the candidate second devices in each group are same or similar. When the second devices are selected, K1 candidate second devices are selected from each group of candidate second devices to serve as the second devices required to collect and report training data, where K1 is a positive integer. This can ensure the diversity of data participating in training and ensure that there are second devices collecting and reporting training data in each group of candidate second devices.

In a specific example, the second devices required to collect and report training data can be determined based on service types of candidate second devices, the candidate second devices are grouped based on the service types of the candidate second devices, and the service types of the candidate second devices in each group are same or similar. When the second devices are selected, K2 candidate second devices are selected from each group of candidate second devices to serve as the second devices required to collect and report training data, where K2 is a positive integer. This can ensure the diversity of data participating in training and ensure that there are second devices collecting and reporting training data in each group of candidate second devices.

In a specific example, the second devices required to collect and report training data can be determined based on data distribution parameters of candidate second devices, the candidate second devices are grouped based on the data distribution parameters of the candidate second devices, and the data distribution parameters of the candidate second devices in each group are same or similar. When the second devices are selected, K3 candidate second devices are selected from each group of candidate second devices to serve as the second devices required to collect and report training data, where K3 is a positive integer. This can ensure the diversity of data participating in training and ensure that there are second devices collecting and reporting training data in each group of candidate second devices.

In a specific example, the second devices required to collect and report training data can be determined based on operation scenarios of candidate second devices, the candidate second devices are grouped based on the operation scenarios of the candidate second devices, and the operation scenarios of the candidate second devices in each group are same or similar. When the second devices are selected, A candidate second devices are selected from each group of candidate second devices to serve as the second devices required to collect and report training data, where A is a positive integer. This can ensure the diversity of data participating in training and ensure that there are second devices collecting and reporting training data in each group of candidate second devices.

In a specific example, the second devices required to collect and report training data can be determined based on communication network access modes of candidate second devices, and priorities of the candidate second devices are ordered based on the communication network access modes of the candidate second devices. The communication network access modes include fixed networks, WiFi, and mobile networks, where the mobile networks include 2G, 3G, 4G, 5G, 6G, and the like. A priority of a fixed network being selected is greater than or equal to a priority of WiFi being selected, and the priority of WiFi being selected is greater than or equal to a priority of the mobile network being selected. In the mobile networks, a higher generation leads to a higher priority being selected. For example, a priority of a 5G candidate second device being selected is higher than that of a 4G candidate second device being selected. B candidate second devices are selected from the candidate second devices in a descending order of priority to serve as the second devices required to collect and report training data, where B is a positive integer.

In a specific example, the second devices required to collect and report training data can be determined based on channel quality of the candidate second devices, and priorities of the candidate second devices are ordered based on the channel quality of the candidate second devices. A candidate second device with higher channel quality has a higher priority being selected. C candidate second devices are selected from the candidate second devices in a descending order of priority to serve as the second devices required to collect and report training data, where C is a positive integer. This can ensure that second devices with good channel quality collect and report training data and ensure the training quality of the specific AI model.

In a specific example, the second devices required to collect and report training data can be determined based on data collection difficulties of the candidate second devices, and priorities of the candidate second devices are ordered based on the data collection difficulties of the candidate second devices. A candidate second device with a lower data collection difficulty has a higher priority being selected. D candidate second devices are selected from the candidate second devices in a descending order of priority to serve as the second devices required to collect and report training data, where D is a positive integer. This can reduce the data collection difficulty.

In a specific example, the second devices required to collect and report training data can be determined based on power states of the candidate second devices, and priorities of the candidate second devices are ordered based on the power states of the candidate second devices. A candidate second device with higher power has a higher priority being selected. In addition, a candidate second device being charged has the highest priority being selected. E candidate second devices are selected from the candidate second devices in a descending order of priority to serve as the second devices required to collect and report training data, where E is a positive integer. This can ensure that the second devices collecting and reporting training data have sufficient power.

In a specific example, the second devices required to collect and report training data can be determined based on storage states of the candidate second devices, and priorities of the candidate second devices are ordered based on the storage states of the candidate second devices. A candidate second device with a larger available storage space has a higher priority being selected. F candidate second devices are selected from the candidate second devices in a descending order of priority to serve as the second devices required to collect and report training data, where F is a positive integer. This can ensure that the second devices collecting and reporting training data have sufficient available storage spaces to store training data.

In some embodiments, before the reporting the training data to the first device, the method further includes:
the second device sends a first request to the first device, requesting collection and reporting of training data.

In some embodiments, the unicast first instruction includes at least one of the following:
number of samples of training data to be collected by the second device, where the numbers of samples of training data to be collected by different second devices are different or the same;
time when the second device is to collect the training data, where the times when different second devices are to collect the training data are different or the same;
time when the second device is to report the training data to the first device, where the times when different second devices are to report the training data are different or the same;
whether the data collected needs preprocessing;
manner of preprocessing the data collected; and
data format of the training data to be reported by the second device to the first device.

In some embodiments, the broadcast first instruction includes at least one of the following:
identity of a candidate second device collecting data;
identity of a candidate second device not collecting data;
number of samples of training data required to be collected by the candidate second device collecting data, where the numbers of samples of training data required to be collected by different candidate second devices are different or the same;
time when the candidate second device collecting data is to collect the training data, where the times when different candidate second devices are to collect the training data are different or the same;
time when the candidate second device collecting data is to report the training data to the first device, where the times when different candidate second devices are to report the training data are different or the same;
whether the data collected needs preprocessing;
manner of preprocessing the data collected;
data format of the training data reported to the first device by the candidate second device collecting data; and
the first screening condition.

The identity of the candidate second device collecting data and the identity of the candidate second device not collecting data constitute the second screening condition. The candidate second device can judge whether it satisfies the second screening condition according to its own identity.

In some embodiments, after that the second device collects training data and reports the training data to the first device, the method further includes:
an inference device receives the trained AI model and a hyper-parameter sent by the first device.

In this embodiment, the first device constructs a training data set based on the received training data, trains the specific AI model, and sends the AI model for training convergence and the hyper-parameter to the L inference devices. The inference devices are second devices required to perform performance verification and inference on the AI model. The inference devices can be selected from the candidate second devices or other second devices than the candidate second devices.

In some embodiments, the AI model is a meta-learning model, and the hyper-parameter may be determined by the first parameter.

In some embodiments, the hyper-parameter includes at least one of the following:
outer iteration learning rate;
inner iteration learning rates corresponding to different training tasks or the inference devices;
meta-learning rate;
inner iteration counts corresponding to different training tasks or the inference devices; and
outer iteration counts corresponding to different training tasks or the inference devices.

In some embodiments, before that an inference device receives the trained AI model and a hyper-parameter sent by the first device, the method further includes:
the inference device performs performance verification on the AI model; and
in a case that a performance verification result satisfies a preset first condition, the inference device uses the AI model for inference. The first condition may be configured or pre-configured by the first device or prescribed in a protocol. After performing performance verification on the AI model, the inference device can also report a result of whether to infer to the first device.

In some embodiments, the AI model subjected to performance verification is an AI model sent by the first device or a model obtained through fine-tuning (fine-tuning) on the AI model sent by the first device.

In this embodiment, the inference device can directly use the AI model sent by the first device to perform performance verification or perform performance verification after performing fine-tuning on the AI model sent by the first device. For fine-tuning of meta learning, special hyper-parameters associated with meta learning corresponding to each inference device may be different. The special hyper-parameters associated with meta learning of each inference device can be determined based on a first parameter corresponding to each inference device (mainly based on data collection difficulty, power state, storage state, and the like in the first parameter).

In this embodiment, the first device may be a network-side device, and the second device may be a terminal. Alternatively, the first device is a network-side device, and the second device is a network-side device, for example, a scenario in which a plurality of network-side devices gather training data to one network-side device for training. Alternatively, the first device is a terminal, and the second device is a terminal, for example, a scenario in which a plurality of terminals gather training data to one terminal for training.

In addition, the candidate second device may be a network-side device or a terminal. The inference device may be a network-side device or a terminal.

In the foregoing embodiments, the specific AI model may be a channel estimation model, a mobility prediction model, and the like. The technical solutions of the embodiments of this application can be applied to not only 6G networks but also 5G networks and 5.5G networks.

The data collection method provided in the embodiments of this application can be executed by a data collection apparatus. In the embodiments of this application, the data collection apparatus performing the data collection method is used as an example to describe the data collection apparatus provided in the embodiments of this application.

An embodiment of this application provides a data collection apparatus. The data collection apparatus includes:
a sending module, configured to send a first instruction to a second device, instructing the second device to collect and report training data for training a specific AI model;
a receiving module, configured to receive training data reported by the second device; and
a training module, configured to construct a data set using the training data and train the specific AI model.

In some embodiments, the sending module is specifically configured to: select N second devices from M candidate second devices according to a preset first screening condition, and unicast the first instruction to the N second devices, where M and N are positive integers, and N is less than or equal to M; or
broadcast the first instruction to the M candidate second devices, where the first instruction carries a second screening condition, and the second screening condition is used for selecting second devices to report the training data, where the second device satisfies the second screening condition.

In some embodiments, the receiving module is further configured to: receive first training data and/or a first parameter reported by the candidate second devices, where the first parameter may be a judgment parameter for the first screening condition.

In some embodiments, the receiving module is configured to receive only the first training data reported by the candidate second devices and determine the first parameter based on the first training data.

In some embodiments, the first parameter includes at least one of the following:
data type of the candidate second device;
data distribution parameter of the candidate second device;
service type of the candidate second device;
operation scenario of the candidate second device;
communication network access mode of the candidate second device;
channel quality of the candidate second device;
data collection difficulty of the candidate second device;
power state of the candidate second device; and
storage state of the candidate second device.

In some embodiments, the unicast first instruction includes at least one of the following:
number of samples of training data to be collected by the second device, where the numbers of samples of training data to be collected by different second devices are different or the same;
time when the second device is to collect the training data, where the times when different second devices are to collect the training data are different or the same;
time when the second device is to report the training data to the first device, where the times when different second devices are to report the training data are different or the same;
whether data collected needs preprocessing;
manner of preprocessing the data collected; and
data format of the training data to be reported by the second device to the first device.

In some embodiments, the broadcast first instruction includes at least one of the following:
identity of a candidate second device collecting data;
identity of a candidate second device not collecting data;
number of samples of training data required to be collected by the candidate second device collecting data, where the numbers of samples of training data required to be collected by different candidate second devices are different or the same;
time when the candidate second device collecting data is to collect the training data, where the times when different candidate second devices are to collect the training data are different or the same;
time when the candidate second device collecting data is to report the training data to the first device, where the times when different candidate second devices are to report the training data are different or the same;
whether data collected needs preprocessing;
manner of preprocessing the data collected;
data format of the training data reported to the first device by the candidate second device collecting data; and
the first screening condition.

In some embodiments, the sending module is further configured to send the trained AI model and a hyper-parameter to L inference devices, where L is greater than M, equal to M, or less than M.

In some embodiments, the AI model is a meta-learning model, and the hyper-parameter is determined by the first parameter.

In some embodiments, the hyper-parameter includes at least one of the following:
outer iteration learning rate;
inner iteration learning rates corresponding to different training tasks or the inference devices;
meta-learning rate;
inner iteration counts corresponding to different training tasks or the inference devices; and
outer iteration counts corresponding to different training tasks or the inference devices.

In this embodiment, the first device may be a network-side device, and the second device may be a terminal. Alternatively, the first device is a network-side device, and the second device is a network-side device, for example, a scenario in which a plurality of network-side devices gather training data to one network-side device for training. Alternatively, the first device is a terminal, and the second device is a terminal, for example, a scenario in which a plurality of terminals gather training data to one terminal for training.

In addition, the candidate second device may be a network-side device or a terminal. The inference device may be a network-side device or a terminal. An embodiment of this application further provides a data collection apparatus. The data collection apparatus includes:
a receiving module, configured to receive a first instruction from a first device, where the first instruction is used to instruct the second device to collect and report training data for training a specific AI model; and
a processing module, configured to collect training data and report the training data to the first device.

In some embodiments, the receiving module is configured to: receive the first instruction unicast by the first device, where the second device is a second device selected by the first device from candidate second devices according to a preset first screening condition; or
receive the first instruction broadcast by the first device to candidate second devices, where the first instruction carries a second screening condition, and the second screening condition is used for selecting second devices to report the training data, where the second device satisfies the second screening condition.

In some embodiments, the processing module is configured to: in a case that the second device has received the first instruction unicast by the first device, collect and report the training data through the second device; or
in a case that the second device has received the first instruction broadcast by the first device, collect and report the training data through the second device.

In some embodiments, the candidate second devices report first training data and/or a first parameter to the first device, where the first parameter may be a judgment parameter for the first screening condition.

In some embodiments, the candidate second devices report only the first training data to the first device, where the first training data is used for determining the first parameter.

In some embodiments, the first parameter includes at least one of the following:
data type of the candidate second device;
data distribution parameter of the candidate second device;
service type of the candidate second device;
operation scenario of the candidate second device;
communication network access mode of the candidate second device;
channel quality of the candidate second device;
data collection difficulty of the candidate second device;
power state of the candidate second device; and
storage state of the candidate second device.

In some embodiments, the processing module is further configured to send a first request to the first device, requesting collection and reporting of training data.

In some embodiments, the unicast first instruction includes at least one of the following:
number of samples of training data to be collected by the second device, where the numbers of samples of training data to be collected by different second devices are different or the same;
time when the second device is to collect the training data, where the times when different second devices are to collect the training data are different or the same;
time when the second device is to report the training data to the first device, where the times when different second devices are to report the training data are different or the same;
whether data collected needs preprocessing;
manner of preprocessing the data collected; and
data format of the training data to be reported by the second device to the first device.

In some embodiments, the broadcast first instruction includes at least one of the following:
identity of a candidate second device collecting data;
identity of a candidate second device not collecting data;
number of samples of training data required to be collected by the candidate second device collecting data, where the numbers of samples of training data required to be collected by different candidate second devices are different or the same;
time when the candidate second device collecting data is to collect the training data, where the times when different candidate second devices are to collect the training data are different or the same;
time when the candidate second device collecting data is to report the training data to the first device, where the times when different candidate second devices are to report the training data are different or the same;
whether data collected needs preprocessing;
manner of preprocessing the data collected;
data format of the training data reported to the first device by the candidate second device collecting data; and
the first screening condition.

In some embodiments, an inference device receives the trained AI model and a hyper-parameter sent by the first device.

In some embodiments, the AI model is a meta-learning model, and the hyper-parameter is determined by the first parameter.

In some embodiments, the hyper-parameter includes at least one of the following:
outer iteration learning rate;
inner iteration learning rates corresponding to different training tasks or the inference devices;
meta-learning rate;
inner iteration counts corresponding to different training tasks or the inference devices; and
outer iteration counts corresponding to different training tasks or the inference devices.

In some embodiments, the data collection apparatus further includes:
an inference module, configured to: perform performance verification on the AI model; and in a case that a performance verification result satisfies a preset first condition, use the AI model for inference.

In some embodiments, the AI model subjected to performance verification is an AI model sent by the first device or a model obtained through fine-tuning on the AI model sent by the first device.

In this embodiment, the first device may be a network-side device, and the second device may be a terminal. Alternatively, the first device is a network-side device, and the second device is a network-side device, for example, a scenario in which a plurality of network-side devices gather training data to one network-side device for training. Alternatively, the first device is a terminal, and the second device is a terminal, for example, a scenario in which a plurality of terminals gather training data to one terminal for training.

In addition, the candidate second device may be a network-side device or a terminal. The inference device may be a network-side device or a terminal. The data collection apparatus in this embodiment of this application may be an electronic device, for example an electronic device having an operating system, or may be a component of an electronic device, for example, an integrated circuit or a chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in the embodiments of this application.

The data collection apparatus provided in this embodiment of this application can implement the processes implemented in the method embodiments of FIGs. 4 and 5, with the same technical effects achieved. To avoid repetition, details are not described herein again.

Optionally, as shown in FIG. 6, an embodiment of this application further provides a communication device 600 including a processor 601, a memory 602, where a program or instructions capable of running on the processor 601 are stored in the memory 602. For example, in a case that the communication device 600 is a first device, when the program or instructions are executed by the processor 601, the processes of the foregoing embodiment of the data collection method are implemented, with the same technical effects achieved. In a case that the communication device 600 is a second device, when the program or instructions are executed by the processor 601, the processes of the foregoing embodiment of the data collection method are implemented, with the same technical effects achieved. To avoid repetition, details are not described herein again.

An embodiment of this application further provides a first device. The first device includes a processor and a memory, where a program or instructions capable of running on the processor are stored in the memory, and when the program or instructions are executed by the processor, the steps of the foregoing data collection method are implemented.

An embodiment of this application further provides a first device. The first device includes a processor and a communication interface. The communication interface is configured to: send a first instruction to a second device, instructing the second device to collect and report training data for training a specific AI model; and receive training data reported by the second device. The processor is configured to construct a data set using the training data and train the specific AI model.

An embodiment of this application further provides a second device. The second device includes a processor and a memory, where a program or instructions capable of running on the processor are stored in the memory, and when the program or instructions are executed by the processor, the steps of the foregoing data collection method are implemented.

An embodiment of this application further provides a second device. The second device includes a processor and a communication interface. The communication interface is configured to: receive a first instruction from a first device, where the first instruction is used to instruct the second device to collect and report training data for training a specific AI model. The processor is configured to collect training data and report the training data to the first device.

The first device may be a network-side device or a terminal, and the second device may be a network-side device or a terminal.

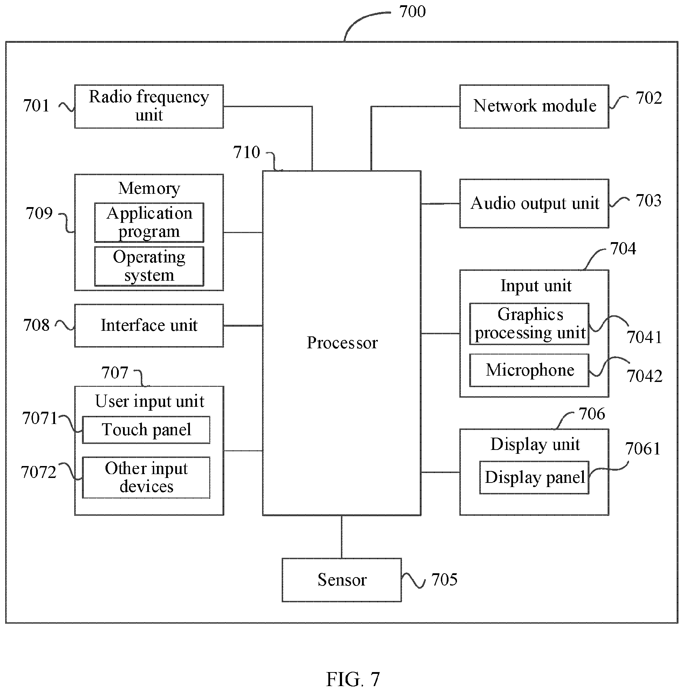

In a case that the first device and/or the second device is a terminal, an embodiment of this application further provides a terminal including a processor and a communication interface. This terminal embodiment corresponds to the foregoing method embodiment on the terminal side. All processes and implementations in the foregoing method embodiment are applicable to this terminal embodiment, with the same technical effects achieved. Specifically, FIG. 7 is a schematic diagram of a hardware structure of a terminal implementing the embodiments of this application.

The terminal 700 includes but is not limited to at least some of these components: a radio frequency unit 701, a network module 702, an audio output unit 703, an input unit 704, a sensor 705, a display unit 706, a user input unit 707, an interface unit 708, a memory 709, a processor 710, and the like.

It can be understood by those skilled in the art that the terminal 700 may further include a power supply (for example, a battery) supplying power to the components. The power supply may be logically connected to the processor 710 via a power management system, so that functions such as charge management, discharge management, and power consumption management are implemented via the power management system. The structure of the terminal shown in FIG. 7 does not constitute any limitation on the terminal, and the terminal may include more or fewer components than shown in the figure, or combine some of the components, or have different arrangements of the components. Details are not described herein.

It should be understood that in this embodiment of this application, the input unit 704 may include a graphics processing unit (Graphics Processing Unit, GPU) 7041 and a microphone 7042. The graphics processing unit 7041 processes image data of still pictures or videos that are obtained by an image capture apparatus (for example, a camera) in an image or video capture mode. The display unit 706 may include a display panel 7061. The display panel 7061 may be configured in a form of a liquid crystal display, an organic light-emitting diode display, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. Specifically, the other input devices 7072 may include but are not limited to a physical keyboard, a function button (for example, volume control button or on/off button), a trackball, a mouse, and a joystick. Details are not described herein.

In this embodiment of this application, the radio frequency unit 701 receives downlink data from a network-side device and transfers the data to the processor 710 for processing; and the radio frequency unit 701 can additionally send uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing programs or instructions and a second storage area for storing data. The first storage area may store an operating system, an application program or instructions required by at least one function (for example, a sound playback function or an image playback function), and the like. Additionally, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in this embodiment of this application includes but is not be limited to these and any other applicable types of memories.

The processor 710 may include one or more processing units. Optionally, the processor 710 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 710.

In some embodiments, the first device is a terminal. The processor 710 is configured to: send a first instruction to a second device, instructing the second device to collect and report training data for training a specific AI model; receive training data reported by the second device; and construct a data set using the training data and train the specific AI model.

In some embodiments, the processor 710 is specifically configured to: select N second devices from M candidate second devices according to a preset first screening condition, and unicast the first instruction to the N second devices, where M and N are positive integers, and N is less than or equal to M; or
broadcast the first instruction to the M candidate second devices, where the first instruction carries a second screening condition, and the second screening condition is used for selecting second devices to report the training data, where the second device satisfies the second screening condition.

In some embodiments, the processor 710 is further configured to: receive first training data and/or a first parameter reported by the candidate second devices, where the first parameter may be a judgment parameter for the first screening condition.

In some embodiments, the processor 710 is configured to receive only the first training data reported by the candidate second devices and determine the first parameter based on the first training data.

In some embodiments, the first parameter includes at least one of the following:
data type of the candidate second device;
data distribution parameter of the candidate second device;
service type of the candidate second device;
operation scenario of the candidate second device;
communication network access mode of the candidate second device;
channel quality of the candidate second device;
data collection difficulty of the candidate second device;
power state of the candidate second device; and
storage state of the candidate second device.

In some embodiments, the unicast first instruction includes at least one of the following:
number of samples of training data to be collected by the second device, where the numbers of samples of training data to be collected by different second devices are different or the same;
time when the second device is to collect the training data, where the times when different second devices are to collect the training data are different or the same;
time when the second device is to report the training data to the first device, where the times when different second devices are to report the training data are different or the same;
whether data collected needs preprocessing;
manner of preprocessing the data collected; and
data format of the training data to be reported by the second device to the first device.

In some embodiments, the broadcast first instruction includes at least one of the following:
identity of a candidate second device collecting data;
identity of a candidate second device not collecting data;
number of samples of training data required to be collected by the candidate second device collecting data, where the numbers of samples of training data required to be collected by different candidate second devices are different or the same;
time when the candidate second device collecting data is to collect the training data, where the times when different candidate second devices are to collect the training data are different or the same;
time when the candidate second device collecting data is to report the training data to the first device, where the times when different candidate second devices are to report the training data are different or the same;
whether data collected needs preprocessing;
manner of preprocessing the data collected;
data format of the training data reported to the first device by the candidate second device collecting data; and
the first screening condition.

In some embodiments, the processor 710 is further configured to send the trained AI model and a hyper-parameter to L inference devices, where L is greater than M, equal to M, or less than M.

In some embodiments, the AI model is a meta-learning model, and the hyper-parameter is determined by the first parameter.

In some embodiments, the hyper-parameter includes at least one of the following:
outer iteration learning rate;
inner iteration learning rates corresponding to different training tasks or the inference devices;
meta-learning rate;
inner iteration counts corresponding to different training tasks or the inference devices; and
outer iteration counts corresponding to different training tasks or the inference devices.

In this embodiment, the first device may be a network-side device, and the second device may be a terminal. Alternatively, the first device is a network-side device, and the second device is a network-side device, for example, a scenario in which a plurality of network-side devices gather training data to one network-side device for training. Alternatively, the first device is a terminal, and the second device is a terminal, for example, a scenario in which a plurality of terminals gather training data to one terminal for training.

In addition, the candidate second device may be a network-side device or a terminal. The inference device may be a network-side device or a terminal. In some embodiments, the second device is a terminal. The processor 710 is configured to: receive a first instruction from a first device, where the first instruction is used to instruct the second device to collect and report training data for training a specific AI model; and collect training data and report the training data to the first device.

In some embodiments, the processor 710 is configured to: receive the first instruction unicast by the first device, where the second device is a second device selected by the first device from candidate second devices according to a preset first screening condition; or
receive the first instruction broadcast by the first device to candidate second devices, where the first instruction carries a second screening condition, and the second screening condition is used for selecting second devices to report the training data, where the second device satisfies the second screening condition.

In some embodiments, the processor 710 is configured to: in a case that the second device has received the first instruction unicast by the first device, collect and report the training data through the second device; or
in a case that the second device has received the first instruction broadcast by the first device, collect and report the training data through the second device.

In some embodiments, the candidate second devices report first training data and/or a first parameter to the first device, where the first parameter may be a judgment parameter for the first screening condition.

In some embodiments, the candidate second devices report only the first training data to the first device, where the first training data is used for determining the first parameter.

In some embodiments, the first parameter includes at least one of the following:
data type of the candidate second device;
data distribution parameter of the candidate second device;
service type of the candidate second device;
operation scenario of the candidate second device;
communication network access mode of the candidate second device;
channel quality of the candidate second device;
data collection difficulty of the candidate second device;
power state of the candidate second device; and
storage state of the candidate second device.

In some embodiments, the processor 710 is further configured to send a first request to the first device, requesting collection and reporting of training data.

In some embodiments, the unicast first instruction includes at least one of the following:
number of samples of training data to be collected by the second device, where the numbers of samples of training data to be collected by different second devices are different or the same;
time when the second device is to collect the training data, where the times when different second devices are to collect the training data are different or the same;
time when the second device is to report the training data to the first device, where the times when different second devices are to report the training data are different or the same;
whether data collected needs preprocessing;
manner of preprocessing the data collected; and
data format of the training data to be reported by the second device to the first device.

In some embodiments, the broadcast first instruction includes at least one of the following:
identity of a candidate second device collecting data;
identity of a candidate second device not collecting data;
number of samples of training data required to be collected by the candidate second device collecting data, where the numbers of samples of training data required to be collected by different candidate second devices are different or the same;
time when the candidate second device collecting data is to collect the training data, where the times when different candidate second devices are to collect the training data are different or the same;
time when the candidate second device collecting data is to report the training data to the first device, where the times when different candidate second devices are to report the training data are different or the same;
whether data collected needs preprocessing;
manner of preprocessing the data collected;
data format of the training data reported to the first device by the candidate second device collecting data; and
the first screening condition.

In some embodiments, an inference device receives the trained AI model and a hyper-parameter sent by the first device.

In some embodiments, the AI model is a meta-learning model, and the hyper-parameter is determined by the first parameter.

In some embodiments, the hyper-parameter includes at least one of the following:
outer iteration learning rate;
inner iteration learning rates corresponding to different training tasks or the inference devices;
meta-learning rate;
inner iteration counts corresponding to different training tasks or the inference devices; and
outer iteration counts corresponding to different training tasks or the inference devices.

In some embodiments, the processor 710 is configured to: perform performance verification on the AI model; and in a case that a performance verification result satisfies a preset first condition, use the AI model for inference.

In some embodiments, the AI model subjected to performance verification is an AI model sent by the first device or a model obtained through fine-tuning on the AI model sent by the first device.

In a case that the first device and/or the second device is a network-side device, an embodiment of this application further provides a network-side device including a processor and a communication interface. This network-side device embodiment corresponds to the foregoing network-side device method embodiment. All processes and implementations in the foregoing method embodiment are applicable to this network-side device embodiment, with the same technical effects achieved.

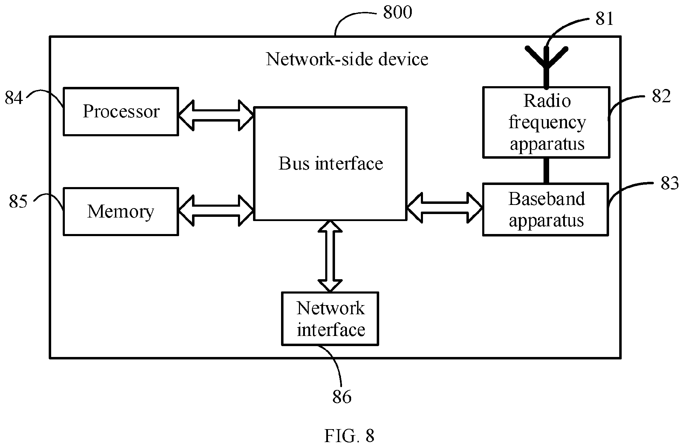

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out through the antenna 81.

The method executed by the network-side device in the foregoing embodiments may be implemented on the baseband apparatus 83. The baseband apparatus 83 includes a baseband processor.

The baseband apparatus 83 may include, for example, at least one baseband board, where a plurality of chips are disposed on the baseband board. As shown in FIG. 8, one of the chips is, for example, a baseband processor, and connected to the memory 85 through a bus interface, to invoke a program in the memory 85 to perform the operations of the network device shown in the foregoing method embodiment.

The network-side device may further include a network interface 86, where the interface is, for example, a common public radio interface (Common Public Radio Interface, CPRI).

Specifically, the network-side device 800 in this embodiment of the present invention further includes: instructions or a program stored in the memory 85 and executable on the processor 84. The processor 84 invokes the instructions or program in the memory 85 to execute the foregoing data collection method, with the same technical effects achieved. To avoid repetition, details are not described herein again.

An embodiment of this application further provides a readable storage medium, where the readable storage medium has a program or instructions stored thereon, and when the program or instructions are executed by a processor, the processes of the foregoing data collection method embodiment are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface, where the communication interface is coupled to the processor, and the processor is configured to run a program or instructions to implement the foregoing data collection method embodiment, with the same technical effects achieved. To avoid repetition, details are not repeated herein.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing data collection method embodiment, with the same technical effects achieved. To avoid repetition, details are not described herein again.

An embodiment of this application further provides a data collection system including a first device and a second device, where the first device may be configured to execute the steps of the foregoing data collection method, and the second device may be configured to execute the steps of the foregoing data collection method.

It should be noted that in this specification, the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a ..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A data collection method, comprising:
sending, by a first device, a first instruction to a second device, instructing the second device to collect and report training data for training a specific AI model;
receiving, by the first device, training data reported by the second device; and
constructing, by the first device, a data set using the training data and training the specific AI model.

2. The data collection method according to claim 1, wherein the sending, by a first device, a first instruction to a second device comprises:
selecting, by the first device, N second devices from M candidate second devices according to a preset first screening condition, and unicasting the first instruction to the N second devices, wherein M and N are positive integers, and N is less than or equal to M; or
broadcasting, by the first device, the first instruction to the M candidate second devices, wherein the first instruction carries a second screening condition, and the second screening condition is used for selecting second devices to report the training data, wherein the second device satisfies the second screening condition.

3. The data collection method according to claim 2, wherein before the sending, by a first device, a first instruction to a second device, the method further comprises:
receiving, by the first device, first training data and/or a first parameter reported by the candidate second devices, wherein the first parameter is a judgment parameter for the first screening condition.

4. The data collection method according to claim 3, wherein
the first device receives only the first training data reported by the candidate second devices and determines the first parameter based on the first training data.

5. The data collection method according to claim 3 or 4, wherein the first parameter comprises at least one of the following:
data type of the candidate second device;
data distribution parameter of the candidate second device;
service type of the candidate second device;
operation scenario of the candidate second device;
communication network access mode of the candidate second device;
channel quality of the candidate second device;
data collection difficulty of the candidate second device;
power state of the candidate second device; and
storage state of the candidate second device.

6. The data collection method according to claim 2, wherein the unicast first instruction comprises at least one of the following:
number of samples of training data to be collected by the second device;
time when the second device is to collect the training data;
time when the second device is to report the training data to the first device;
whether data collected needs preprocessing;
manner of preprocessing the data collected; and
data format of the training data to be reported by the second device to the first device.

7. The data collection method according to claim 2, wherein the broadcast first instruction comprises at least one of the following:
identity of a candidate second device collecting data;
identity of a candidate second device not collecting data;
number of samples of training data required to be collected by the candidate second device collecting data;
time when the candidate second device collecting data is to collect the training data;
time when the candidate second device collecting data is to report the training data to the first device;
whether data collected needs preprocessing;
manner of preprocessing the data collected;
data format of the training data reported to the first device by the candidate second device collecting data; and
the first screening condition.

8. The data collection method according to claim 3, wherein after the training a specific AI model, the method further comprises:
sending, by the first device, the trained AI model and a hyper-parameter to L inference devices, wherein L is greater than M, equal to M, or less than M.

9. The data collection method according to claim 8, wherein the AI model is a meta-learning model, and the hyper-parameter is determined by the first parameter.

10. The data collection method according to claim 8, wherein the hyper-parameter comprises at least one of the following:
outer iteration learning rate;
inner iteration learning rates corresponding to different training tasks or the inference devices;
meta-learning rate;
inner iteration counts corresponding to different training tasks or the inference devices; and
outer iteration counts corresponding to different training tasks or the inference devices.

11. The data collection method according to claim 1, wherein
the first device is a network-side device, and the second device is a terminal; or
the first device is a network-side device, and the second device is a network-side device; or
the first device is a terminal, and the second device is a terminal.

12. A data collection method, comprising:
receiving, by a second device, a first instruction from a first device, wherein the first instruction is used to instruct the second device to collect and report training data for training a specific AI model; and
collecting, by the second device, training data and reporting the training data to the first device.

13. The data collection method according to claim 12, wherein the receiving, by a second device, a first instruction from a first device comprises:
receiving, by the second device, the first instruction unicast by the first device, wherein the second device is a second device selected by the first device from candidate second devices according to a preset first screening condition; or
receiving, by the second device, the first instruction broadcast by the first device to candidate second devices, wherein the first instruction carries a second screening condition, and the second screening condition is used for selecting second devices to report the training data, wherein the second device satisfies the second screening condition.

14. The data collection method according to claim 13, wherein the collecting, by the second device, training data and reporting the training data to the first device comprises:
in a case that the second device has received the first instruction unicast by the first device, collecting and reporting, by the second device, the training data; or
in a case that the second device has received the first instruction broadcast by the first device, collecting and reporting, by the second device, the training data.

15. The data collection method according to claim 13, wherein before the receiving, by a second device, a first instruction from a first device, the method further comprises:
reporting, by the candidate second devices, first training data and/or a first parameter to the first device, wherein the first parameter is a judgment parameter for the first screening condition.

16. The data collection method according to claim 15, wherein the candidate second devices report only the first training data to the first device, wherein the first training data is used for determining the first parameter.

17. The data collection method according to claim 15, wherein the first parameter comprises at least one of the following:
data type of the candidate second device;
data distribution parameter of the candidate second device;
service type of the candidate second device;
operation scenario of the candidate second device;
communication network access mode of the candidate second device;
channel quality of the candidate second device;
data collection difficulty of the candidate second device;
power state of the candidate second device; and
storage state of the candidate second device.

18. The data collection method according to claim 12, wherein before the reporting the training data to the first device, the method further comprises:
sending, by the second device, a first request to the first device, requesting collection and reporting of training data.

19. The data collection method according to claim 13, wherein the unicast first instruction comprises at least one of the following:
number of samples of training data to be collected by the second device;
time when the second device is to collect the training data;
time when the second device is to report the training data to the first device;
whether data collected needs preprocessing;
manner of preprocessing the data collected; and
data format of the training data to be reported by the second device to the first device.

20. The data collection method according to claim 13, wherein the broadcast first instruction comprises at least one of the following:
identity of a candidate second device collecting data;
identity of a candidate second device not collecting data;
number of samples of training data required to be collected by the candidate second device collecting data;
time when the candidate second device collecting data is to collect the training data;
time when the candidate second device collecting data is to report the training data to the first device;
whether data collected needs preprocessing;
manner of preprocessing the data collected;
data format of the training data reported to the first device by the candidate second device collecting data; and
the first screening condition.

21. The data collection method according to claim 15, wherein after the collecting, by the second device, training data and reporting the training data to the first device, the method further comprises:
receiving, by an inference device, the trained AI model and a hyper-parameter sent by the first device.

22. The data collection method according to claim 21, wherein the AI model is a meta-learning model, and the hyper-parameter is determined by the first parameter.

23. The data collection method according to claim 21, wherein the hyper-parameter comprises at least one of the following:
outer iteration learning rate;
inner iteration learning rates corresponding to different training tasks or the inference devices;
meta-learning rate;
inner iteration counts corresponding to different training tasks or the inference devices; and
outer iteration counts corresponding to different training tasks or the inference devices.

24. The data collection method according to claim 21, wherein after the receiving, by an inference device, the trained AI model and a hyper-parameter sent by the first device, the method further comprises:
performing, by the inference device, performance verification on the AI model; and
in a case that a performance verification result satisfies a preset first condition, using, by the inference device, the AI model for inference.

25. The data collection method according to claim 24, wherein the AI model subjected to performance verification is an AI model sent by the first device or a model obtained through fine-tuning on the AI model sent by the first device.

26. The data collection method according to claim 12, wherein
the first device is a network-side device, and the second device is a terminal; or
the first device is a network-side device, and the second device is a network-side device; or
the first device is a terminal, and the second device is a terminal.

27. A data collection apparatus, comprising:
a sending module, configured to send a first instruction to a second device, instructing the second device to collect and report training data for training a specific AI model;
a receiving module, configured to receive training data reported by the second device; and
a training module, configured to construct a data set using the training data and train the specific AI model.

28. The data collection apparatus according to claim 27, wherein
the sending module is specifically configured to: select N second devices from M candidate second devices according to a preset first screening condition, and unicast the first instruction to the N second devices, wherein M and N are positive integers, and N is less than or equal to M; or
broadcast the first instruction to the M candidate second devices, wherein the first instruction carries a second screening condition, and the second screening condition is used for selecting second devices to report the training data, wherein the second device satisfies the second screening condition.

29. A data collection apparatus, comprising:
a receiving module, configured to receive a first instruction from a first device, wherein the first instruction is used to instruct the second device to collect and report training data for training a specific AI model; and
a processing module, configured to collect training data and report the training data to the first device.

30. The data collection apparatus according to claim 29, wherein the data collection apparatus further comprises:
an inference module, configured to: perform performance verification on the AI model; and in a case that a performance verification result satisfies a preset first condition, use the AI model for inference.

31. A first device, comprising a processor and a memory, wherein a program or instructions capable of running on the processor are stored in the memory, and when the program or instructions are executed by the processor, the steps of the data collection method according to any one of claims 1 to 11 are implemented.

32. A second device, comprising a processor and a memory, wherein a program or instructions capable of running on the processor are stored in the memory, and when the program or instructions are executed by the processor, the steps of the data collection method according to any one of claims 12 to 26 are implemented.

33. A readable storage medium, wherein the readable storage medium has a program or instructions stored thereon, and when the program or the instructions are executed by a processor, the steps of the data collection method according to any one of claims 1 to 11 are implemented, or the steps of the data collection method according to any one of claims 12 to 26 are implemented.
